# EUROPEAN PATENT APPLICATION

(11) **EP 2 103 874 A2**
(43) Date of publication of application: **23.09.2009**
(21) Application number: 09155641.5
(22) Date of filing: 19.03.2009
(51) Int. Cl.: F23G 7/00, F23G 5/02, F23G 5/16

(54) **Method for treating waste, particularly metallic residues from the milling of tires, and corresponding apparatus**

(30) Priority: 21.03.2008 IT VR20080038
(71) Applicant: Roberto, Nicola, 37013 Caprino Veronese (VR) (IT)
(72) Inventor: Ottolini, Giancarlo, 30174 Chirignago VE (IT)
(74) Representative: Modiano, Micaela Nadia

(57) **Abstract**

A method for treating waste, particularly metallic residues from the milling of tires, comprising the steps of:
- loading of the metallic plies cut during the step for milling the tires within a combustion chamber (3);
- reduction of the percentage of oxygen that is present in the combustion chamber (3);
- increase in the temperature inside the combustion chamber (3) in order to obtain pyrolysis of the rubber that is anchored to the cut metal plies;
- sending of the exhaust gases produced during pyrolysis to an afterburning chamber (6);
- sending of the exhaust gases from the afterburning chamber (6) to a scrubbing tower (7);
- discharge from the combustion chamber (3) of the cut and treated metal plies.

## Description

The present invention relates to a method for treating waste, particularly metallic residues from the milling of tires, and to the corresponding apparatus.

Currently, the most widely used technology for treating tires is granulation, which can be performed at ambient temperature or cold.

In the first case, mills arranged in series are used which reduce the tire to a particle size of a few millimeters. The process provides for a first crushing step, a step for eliminating the metallic fraction, and an additional step for size reduction. Elimination of the textile fraction is entrusted to an air separator, which removes the lighter part.

The cold process, known as cryomilling, uses the characteristics of the materials at low temperatures. The bonds among the various components (rubber, fabric and metal) are weakened and the components can thus be separated more easily.

Cryomilling apparatuses use traditional mills and screens in addition to the machines used to reduce the temperature.

In any case, the most delicate and problematic step of the entire process is the cleaning of the metallic residues that originate from the milling of the tires.

The metallic plies cut during the milling step in fact always retain a certain percentage of rubber, which is strongly anchored and very difficult to remove even if processes that use solvent or fuel are used.

The aim of the present invention is to provide a method for treating waste, particularly metallic residues from the milling of tires, and the corresponding apparatus, which are capable of separating perfectly the steel material from the rubber granules.

Within this aim, an object of the present invention is to provide an apparatus for treating waste that has a very simple structure and a high durability.

This aim and this and other objects, which will become better apparent hereinafter, are achieved by a method for treating waste, particularly metallic residues from the milling of tires, characterized in that it comprises the steps of:
- loading of the metallic plies cut during the step for milling the tires within a combustion chamber;
- reduction of the percentage of oxygen that is present in the combustion chamber;
- increase in the temperature inside the combustion chamber in order to obtain pyrolysis of the rubber that is anchored to the cut metal plies;
- sending of the exhaust gases produced during pyrolysis to an afterburning chamber;
- sending of the exhaust gases from the afterburning chamber to a scrubbing tower;
- discharge from the combustion chamber of the cut and treated metal plies.

The above aim and objects are also achieved by an apparatus for treating waste, particularly metallic residues from the milling of tires, characterized in that it comprises means for loading/unloading the material to be treated toward and from a combustion chamber that is associated with a device reducing the percentage of oxygen, the combustion chamber being associated with a heating device that is designed to adjust the temperature and being connectable, by means of a fluid connection duct, to an exhaust gas afterburning chamber, the apparatus comprising a tower for scrubbing the exhaust gases that exit from the afterburning chamber.

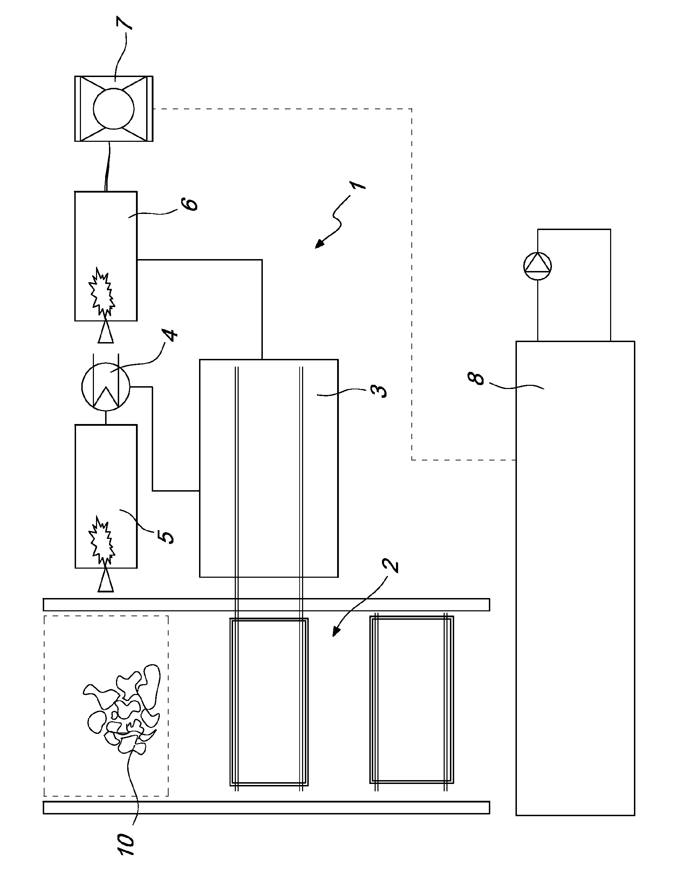

Further characteristics and advantages of the invention will become better apparent from the following detailed description of a preferred but not exclusive embodiment of an apparatus for treating waste, particularly metallic residues from the milling of tires according to the invention, illustrated by way of non-limiting example in the accompanying drawing, wherein the sole Figure is a simplified constructive diagram of an apparatus for treating waste according to the invention.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figure, an apparatus for treating waste, particularly metallic residues from the milling of tires, generally designated by the reference numeral 1, comprises means 2 for loading/unloading the material to be treated toward and from a combustion chamber 3.

The loading/unloading means 2 can be constituted by a continuous vibrating screen, which allows to eliminate the parts of material to be treated that are not intimately bonded to the metallic residues.

The characteristics of the material to be treated that is fed to the combustion chamber 3 are conveniently ensured by the presence of an appropriately sized carding machine.

The combustion chamber 3 is associated with a device 4 for reducing the percentage of oxygen and with a heating device 5 that is designed to adjust the temperature.

Further, the combustion chamber 3 can be connected, by means of a fluid connection duct, to an afterburning chamber 6 for the exhaust gases, which in turn is associated with a scrubbing tower 7 for the exhaust gases that exit from the afterburning chamber 6.

In particular, the apparatus 1 thus structured allows to subject the waste 10 to be treated to a process that comprises the steps of:
- loading of the metallic plies cut during the step for milling the tires within a combustion chamber;
- reduction of the percentage of oxygen that is present in the combustion chamber;
- increase in the temperature inside the combustion chamber in order to obtain pyrolysis of the rubber that is anchored to the cut metal plies;
- sending of the exhaust gases produced during pyrolysis to an afterburning chamber;
- sending of the exhaust gases from the afterburning chamber to a scrubbing tower;
- discharging from the combustion chamber the cut and treated metal plies.

Advantageously, the step for reducing the percentage of oxygen that is present in the combustion chamber 3 provides for the introduction of a stream of inert gas in the combustion chamber 3.

Conveniently, the temperature inside the combustion chamber 3, in order to obtain correct and effective pyrolysis of the rubber that is anchored to the metallic plies, is comprised between 300°C and 450°C, preferably between 350°C and 400°C.

In order to ensure precise and reliable control of the temperature within the combustion chamber 3, the apparatus 1 can be provided with a temperature detecting sensor.

Inside the combustion chamber 3, the material to be treated is brought, as mentioned, to the combustion temperature (which is comprised between 350°C and 450°C) by using water-based heating devices which intervene, with an adjustment of the on/off type, during the treatment of the organic material to be treated.

The maximum temperature inside the combustion chamber 3 is maintained for a time comprised between 25 minutes and 40 minutes, preferably for at least 30 minutes, dividing the combustion chamber 3 into multiple regions, for example ten, each of which comprises a respective burner, for example of the aspirated-air type, provided with means for adjusting the flow of gas and air.

The water-based heating devices are advantageously distributed uniformly along the extension of the combustion chamber 3 in order to define regions at a different temperature.

The temperature detection sensors are conveniently constituted by thermocouples of the K type with a double filament, one for the adjustment loop of the apparatus 1 and one connected to an overtemperature alarm for each region, which is wired to a threshold regulator at the output from the combustion chamber 3; cooling of the treated product is provided before discharge.

It has been found experimentally that it is particularly advantageous to provide, inside the afterburning chamber 6, a temperature comprised between 800°C and 1000°C, preferably between 900°C and 950°C.

It has been observed that the presence of SOx and Lice in the exhaust gases can be eliminated by means of a targeted treatment of emissions downstream of the afterburning chamber.

In this regard, due to the high exit temperature of the emissions from the afterburning chamber 6, an exhaust gas/air exchanger is installed which ensures that the enthalpic content of the exhaust gases is such that they can be treated in a water-based suppressor of the Venturi scrubber type with stainless steel ring filling.

In particular, the plume of steam at the exit of the Venturi scrubber is heated to a temperature of above 100°C before discharging the emissions into the atmosphere.

With reference to the Figure, the device for reducing the oxygen percentage 4 comprises a device for sending an inert exogas.

This device for sending an inert exogas is associated with a device for producing inert exogas which comprises an apparatus for the combustion of methane or of a hydrocarbon in the liquid state.

Conveniently, the apparatus 1 can be provided with a sensor for detecting the percentage of oxygen within such combustion chamber.

The treated material is then sent to a passivation tank 8, inside which it is washed with centrifuged water and with additives in order to allow the ferrous material to be transferred to steelworks.

The discharge of the treated material can be performed by using a vibrating belt that is adapted to separate the components that have already been carbonized during combustion but are still bonded to the filler.

This operation ensures cleanliness of the final product prior to compaction.

The operation of the apparatus for treating waste, particularly metallic residues from the milling of tires, according to the invention, is evident in what has been described above.

In practice it has been found that the invention has achieved the intended aim and objects.

In practice, the materials used, as well as the contingent shapes and dimensions, may be any according to requirements.

All the details may further be replaced with other technically equivalent elements.

The disclosures in Italian Patent Application No. VR2008A000038 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for treating waste, particularly metallic residues from the milling of tires, **characterized in that** it comprises the steps of:
- loading of the metallic plies cut during the step for milling the tires within a combustion chamber;
- reduction of the percentage of oxygen that is present in said combustion chamber;
- increase in the temperature inside said combustion chamber in order to obtain pyrolysis of the rubber that is anchored to said cut metal plies;
- sending of the exhaust gases produced during said pyrolysis to an afterburning chamber;
- sending of the exhaust gases from said afterburning chamber to a scrubbing tower;
- discharge from said combustion chamber of the cut and treated metal plies.

2. The method according to claim 1, **characterized in that** said step for reducing the percentage of oxygen that is present in said combustion chamber provides for the introduction of a flow of inert exogas into said chamber.

3. The method according to one or more of the preceding claims, **characterized in that** the temperature inside said combustion chamber in order to obtain pyrolysis of the rubber anchored to said cut metal plies is comprised between 300°C and 450°C, preferably between 350°C and 400°C.

4. The method according to one or more of the preceding claims, **characterized in that** said afterburning chamber has a temperature comprised between 800°C and 1000°C, preferably between 900°C and 950°C.

5. The method according to one or more of the preceding claims, **characterized in that** it comprises a step for sending the treated material in output from said combustion chamber to a passivation tank, inside which it is subjected to washing with centrifuged water.

6. An apparatus for treating waste, particularly metallic residues from the milling of tires, **characterized in that** it comprises means for loading/unloading the material to be treated toward and from a combustion chamber associated with a device for reducing the percentage of oxygen, said combustion chamber being associated with a heating device that is designed to adjust the temperature and being connectable, by means of a fluid connection duct, to a chamber for the afterburning of the exhaust gases, said apparatus comprising a tower for scrubbing the exhaust gases in output from said afterburning chamber.

7. The apparatus according to claim 6, **characterized in that** said device for reducing the percentage of oxygen comprises a device for sending an inert exogas.

8. The apparatus according to claim 7, **characterized in that** said device for sending an inert exogas is associated with a device for producing an inert exogas.

9. The apparatus according to claim 8, **characterized in that** said device for producing inert exogas comprises an apparatus for the combustion of methane or of a hydrocarbon in the liquid state.

10. The apparatus according to one or more of claims 6 to 9, **characterized in that** it comprises a sensor for detecting the percentage of oxygen within said combustion chamber.
